# EUROPÄISCHE PATENTANMELDUNG

(11) **EP 2 119 335 A1**
(43) Veröffentlichungstag der Anmeldung: **18.11.2009**
(21) Anmeldenummer: 09006248.0
(22) Anmeldetag: 08.05.2009
(51) Int. Cl.: A01C 17/00

(54) **Schleuderstreuer**

(30) Priorität: 14.05.2008 DE 102008023548
(71) Anmelder: Amazonen-Werke H. Dreyer GmbH & Co. KG, 49205 Hasbergen (DE)
(72) Erfinder: Götzen, Nils, 470506 Neukirchen-Vluyn (DE); Johannaber, Stefan Jan, 49536 Lienen (DE)

(57) **Zusammenfassung**

Schleuderstreuer mit einem von einem Rahmen getragenen trichterförmigen Vorratsbehälter (1), der durch zumindest einem von einer Bodenplatte (8), in der zumindest eine durch zumindest einen Schieber (10) in ihrer Öffnungsweite einstellbare Auslauföffnung (9) angeordnet ist, gebildeten Dosierorgan (11) in seinem unteren Bereich verschlossen ist, wobei unterhalb der in der Bodenplatte (8) angeordneten Auslauföffnung (9) zumindest ein mit Wurfelementen, vorzugsweise Wurfschaufeln (13) besetztes rotierend angetriebenes Schleuderelement, vorzugsweise Schleuderscheibe (3) angeordnet ist. Um eine möglichst geringe Fallhöhe des aus der Auslauföffnung (9) herausströmenden Materials bis zur Erfassung durch die Wurfelemente (13) in einfacher Weise bei Streuer mit großen Arbeitsbreiten zu verwirklichen, ist vorgesehen die Bodenplatte (8) und der zugeordnete Schieber einerseits und das Schleuderelement (3) und/oder die Oberseite (14) der Wurfelemente (13) andererseits in ihrem einander unmittelbar benachbarten Bereich zumindest annähernd parallel zueinander ausgerichtet sind, wobei die Bodenplatte (8) zumindest im Bereich der Auslauföffnungen (9) und das Schleuderelement (3) und/oder die Oberseite (14) der Wurfelemente (13) mit einem Winkel (A,B,C) zwischen 5° und 20° vorzugsweise etwa 14-16° zur Horizontalen (7) angestellt ausgebildet sind.

## Beschreibung

Die Erfindung betrifft einen Schleuderstreuer zum Ausbringen von körnigen Materialien, wie Düngemitteln etc.

Ein derartiger Schleuderstreuer ist beispielsweise durch die EP 0 175 388 A2 bekannt geworden. Dieser Schleuderstreuer weist einen von einem Rahmen getragenen trichterförmigen Vorratsbehälter auf. Der Vorratsbehälter ist in seinem unteren Bereich von einer Bodenplatte verschlossen. In der Bodenplatte befindet sich zumindest eine durch zumindest einen Schieber in ihrer Öffnungsweite einstellbare Auslauföffnung. Die Auslauföffnung und der Schieber bilden das Dosierorgan. Unterhalb des Schiebers ist eine rotierende Schleuderscheibe, die mit Wurfschaufeln besetzt ist, angeordnet. Die Bodenplatte und der zugeordnete Schieber einerseits und das Schleuderelement und die Oberseite der Wurfelemente andererseits sind bei diesem Schleuderstreuer in ihrem einander unmittelbar benachbarten Bereich zumindest annähernd parallel zueinander ausgerichtet. Sowohl Schieber wie Bodenplatte, Oberkante der Wurfelemente und Schleuderscheiben sind horizontal ausgerichtet.

Eine derartige horizontale Ausrichtung ist insbesondere zur Erzielung großer Arbeitsbreite nachteilig.

Durch die DE 199 06 428 A1 ist ein weiterer Schleuderstreuer bekannt geworden, dessen Bodenplatte, in dem sich eine Auslauföffnung befindet und durch einen Schieber in ihrer Öffnungsweite einstellbar ist, ist horizontal ausgerichtet. Zur Erzielung großer Wurfweiten ist die unterhalb des Dosierorgans rotierend angetriebene Schleuderscheibe durchgeprägt ausgebildet und weist eine teller- oder topfförmige Form auf. Die Schleuderscheibe ist mit einem Winkel zur Horizontalen angestellt ausgebildet, um größere Wurfweiten zu erreichen. Durch die Anstellung des Schleuderelementes mit einem Winkel zur Horizontalen wird erreicht, dass der Dünger schräg nach oben von den auf der Schleuderscheibe angeordneten Wurfelementen abgeworfen wird. Die Oberseite dieser Wurfelemente ist mit einem anderen Winkel als die Unterseite bzw. die Schleuderscheibe angeordnet und verjüngt sich nach außen. Die Oberseite der Wurfschaufel ist zumindest annähernd parallel zur Oberkante der Bodenplatte bzw. des Schieberelementes angeordnet. Hierdurch ist ein großer Abstand zwischen der Oberseite des Wurfelementes und der Bodenplatte vorhanden, wobei dieser Abstand noch dadurch verstärkt wird, dass zwischen dem Schieber und der Oberseite des Wurfelementes ein eine gewisse Länge aufweisender Leitschacht angeordnet ist.

Der Erfindung liegt die Aufgabe zugrunde, eine möglichst geringe Fallhöhe des aus der Auslauföffnung herausströmenden Materials bis zur Erfassung durch die Wurfelemente in einfacher Weise bei Streuern mit großen Arbeitsbreiten von bis zu 50m zu verwirklichen.

Diese Aufgabe wird erfindungsgemäß durch die Merkmale des Anspruches 1 gelöst. Infolge der mit einem Winkel zur Horizontalen angestellten Bodenplatte, Schieber sowie des Schleuderelementes mit der Wurfschaufel lässt sich eine dichte und kompakte Anordnung von Bodenplatte und Schieber einerseits und Schleuderscheibe und Wurfelementen andererseits zueinander verwirklichen. Durch die geringe Fallhöhe des Materials aus der Auslauföffnung in die Schaufel ergibt sich eine Hanglagenunempfindlichkeit, wenn der Streuer als solcher schräg zur Horizontalen ausgerichtet ist. Hierdurch ergibt sich auch keine Aufgabenflächenverschiebung bei unterschiedlicher Neigung des Streuers zur Senkrechten bzw. zur Horizontalen. Durch die parallele Anordnung der Bodenplatte und des Schiebers zu der Schleuderscheibe lässt sich ein großer Verstellweg des Schiebers und somit eine große Auslauföffnung bei dichter Zuordnung der Bauteile zueinander verwirklichen.

Eine kompakte Zuordnung von Schleuderscheiben, Wurfelement einerseits und Bodenplatte und Schieber andererseits zueinander, lässt sich dadurch verwirklichen, dass das zwischen der einander benachbarten Unterseite des von der Bodenplatte und/oder dem die Auslauföffnung in ihrer Öffnungsweise einstellbaren Schieber gebildeten Dosierorgans und/oder Oberseite der Wurfelemente ein Abstand von maximal 20 mm besteht.

Eine einfache Zuordnung von Auslauföffnung und Schieber lässt sich dadurch erreichen, dass die Auslauföffnung und/oder der zugeordnete Schieber unmittelbar benachbart zu der Oberseite der Wurfelemente angeordnet sind.

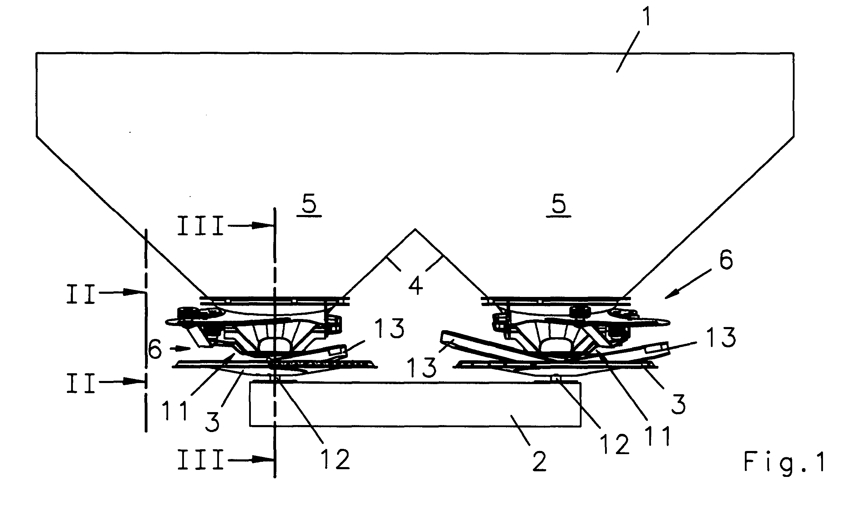

Weitere Einzelheiten der Erfindung sind der Beispielsbeschreibung und den Zeichnungen zu entnehmen. Hierbei zeigen
- Fig. 1: den Schleuderstreuer in der Ansicht von hinten und in Prinzipdarstellung,
- Fig. 2: die Zuordnung der Bodenplatte und des Schiebers des Dosierorgans zu der Schleuderscheibe in der Ansicht II/II und in vergrößerter Darstellung und
- Fig. 3: die Zuordnung der Bodenplatte und des Schiebers des Dosierorgans zu der Schleuderscheibe in der Ansicht III/III und in vergrößerter Darstellung.

Der Schleuderstreuer weist den von einem nicht dargestellten Rahmen getragenen Vorratsbehälter 1 mit dem darunter angeordneten Antriebsblock 2 für die Schleuderscheiben 3 auf. Der Vorratsbehälter 1 ist durch ein dachförmiges Mittelteil 4 in zwei trichterförmige Auslaufbereiche 5 aufgeteilt. Diese trichterförmigen Auslaufbereiche sind jeweils durch eine topfförmig ausgebildete Dosiereinheit 6 abgeschlossen. Die topfförmige Dosiereinheit 6 weist eine mit einem Winkel A von 5°-20°, vorzugsweise 14°-16° zur Horizontalen 7 angestellte Bodenplatte 8 auf. In dieser Bodenplatte 8 ist zumindest eine Auslauföffnung 9 angeordnet. Unterhalb der Bodenplatte 8 ist ein gegenüber der Bodenplatte 8 und der Auslauföffnung 9 die Auslauföffnung in ihrer Öffnungsweite einstellende und verschließender Schieber 10 angeordnet. Der Schieber 10 ist parallel zur Bodenplatte 8 ausgerichtet. Der Schieber 10 bildet zusammen mit der Auslauföffnung 9 das Dosierorgan 11.

Unterhalb der Bodenplatte 8 ist auf den aus dem Antriebsblock 2 herausragenden und rotierend angetriebenen Antriebswellen 12 jeweils eine Schleuderscheibe 3 drehfest angeordnet. Auf jeder Schleuderscheibe 13 sind im Ausführungsbeispiel zwei als Wurfelemente ausgebildete Wurfschaufeln 13 angeordnet, die in Scheibenebene in unterschiedlichen Winkeln mittels nicht dargestellter Verstellelemente einstellbar sind. Die Schleuderscheibe 3 ist durchgeprägt und weist einen Winkel B zwischen 5° und 20°, vorzugsweise etwa 14°-16° zur Horizontalen 7 auf. Hierbei ist der Durchprägungswinkel B der Schleuderscheibe 3 gleich groß wie der Anstellwinkel A der Bodenplatte 8 und des Schiebers 10 zur Horizontalen 7, so dass die Schleuderscheibe 3 und die Bodenplatte 8 und der Schieber 10 zumindest im Bereich der Auslauföffnung 9 parallel zueinander ausgerichtet sind. Des weiteren ist die Oberseite 14 der Wurfelemente 13 ebenfalls parallel zur Ebene der Schleuderscheibe 3 und zur Bodenplatte 8 ausgerichtet, so dass auch die Oberseite 14 der Wurfelemente 13 mit einem Winkel C zwischen 5° und 20°, vorzugsweise etwa 14°-16° zur Horizontalen 7 angestellt ausgebildet ist.

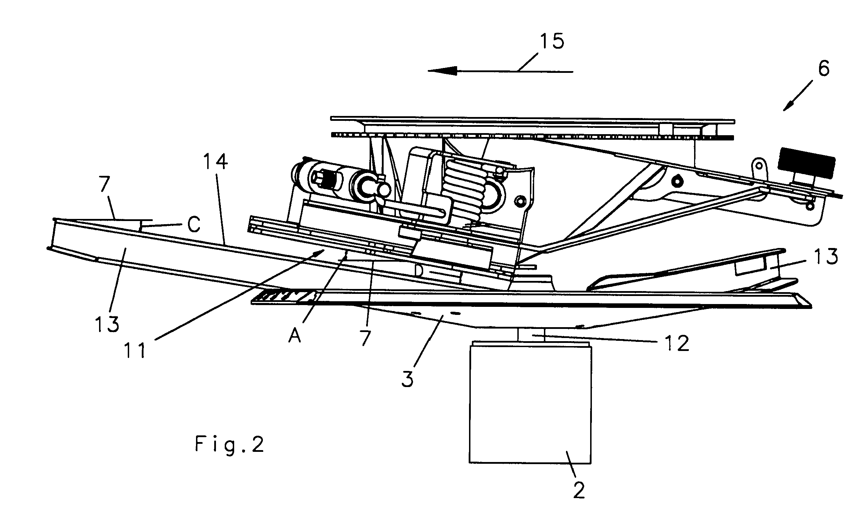

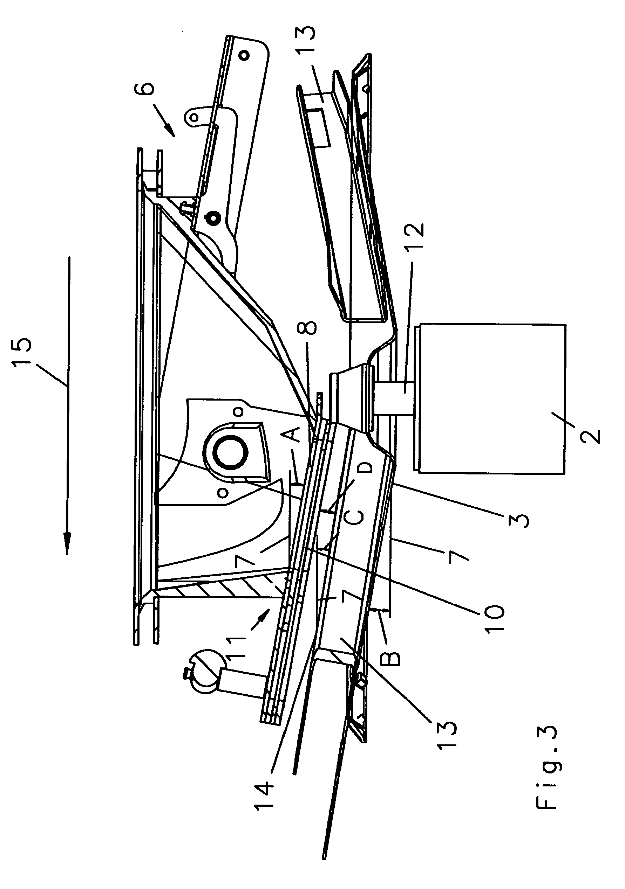

Des weiteren besteht zwischen der einander benachbarten Unterseite des von der Bodenplatte 8 und dem die Auslauföffnung 9 in ihrer Öffnungsweite einstellbaren Schieber 10 gebildeten Dosierorgans 11 und der Oberseite 14 der Wurfelemente 13 ein Abstand D von max. 20mm, im Ausführungsbeispiel etwa 5-10mm. Hierbei sind die Auslauföffnungen 9 und der zugeordnete Schieber 10 unmittelbar benachbart zu der Oberseite 14 der Wurfelemente 13 angeordnet, wie die Zeichnungen gemäß Fig. 2 und 3 zeigen.

Durch die Pfeile 15 in den Fig. 2 und 3 wird die Fahrtrichtung des Streuers gezeigt.

Durch die schräg angeordnete Bodenplatte 8, die parallel zu der Ebene der Scheiben 3 und der Schaufeloberkante 14 angeordnet ist, lässt sich eine geringe Fallhöhe des aus der Auslauföffnung 9 heraustretenden Materials, wie Düngemittel in Richtung der Schleuderscheibe 3 realisieren. Hierdurch ergibt sich eine Hanglagenunempfindlichkeit, d.h. selbst wenn der Streuer schräg am Hang zur Horizontalen angestellt ist, ergibt sich keine auswirkende Aufgabeflächenveränderung. Weiterhin ist eine sehr dichte Schieberanordnung des Dosierorgans 11 zu der Schleuderscheibe 3 bei Realisierung eines großen Verstellweges des Schiebers 10 möglich.

## Patentansprüche

1. Schleuderstreuer mit einem von einem Rahmen getragenen trichterförmigen Vorratsbehälter (1), der durch zumindest einem von einer Bodenplatte, in der zumindest eine durch zumindest einen Schieber (10) in ihrer Öffnungsweite einstellbare Auslauföffnung (9) angeordnet ist, gebildeten Dosierorgan (11) in seinem unteren Bereich verschlossen ist, wobei unterhalb der in der Bodenplatte (8) angeordneten Auslauföffnung (9) zumindest ein mit Wurfelementen, vorzugsweise Wurfschaufeln (13) besetztes rotierend angetriebenes Schleuderelement (3), vorzugsweise Schleuderscheibe angeordnet ist, wobei die Bodenplatte (8) und der zugeordnete Schieber (10) einerseits und das Schleuderelement und/oder die Oberseite (14) der Wurfelemente (13) andererseits in ihrem einander unmittelbar benachbarten Bereich zumindest annähernd parallel zueinander ausgerichtet sind, wobei die Bodenplatte (8) zumindest im Bereich der Auslauföffnungen (9) und das Schleuderelement (3) und/oder die Oberseite (14) der Wurfelemente (13) mit einem Winkel (A, B, C) zwischen 5° und 20° vorzugsweise etwa 14-16° zur Horizontalen (7) angestellt ausgebildet sind.

2. Schleuderstreuer nach Anspruch 1, **dadurch gekennzeichnet, dass** zwischen der einander benachbarten Unterseite des von der Bodenplatte (8) und/oder dem die Auslauföffnung (9) in ihrer Öffnungsweise einstellbaren Schieber (10) gebildeten Dosierorgans (11) und/oder Oberseite (14) der Wurfelemente (13) ein Abstand A von maximal 20 mm besteht.

3. Schleuderstreuer nach Anspruch 1, **dadurch gekennzeichnet, dass** die Auslauföffnung (9) und/oder der zugeordnete Schieber (10) unmittelbar benachbart zu der Oberseite (14) der Wurfelemente (13) angeordnet sind.
